Europäisches Patentamt

European Patent Office

Office européen des brevets

(19)

(11) Veröffentlichungsnummer: **0 419 724 B1**

# (12) EUROPÄISCHE PATENTSCHRIFT

(45) Veröffentlichungstag der Patentschrift: **16.02.94**

(51) Int. Cl.⁵: **H02M 3/335**

(21) Anmeldenummer: **89118083.8**

(22) Anmeldetag: **29.09.89**

(54) Schaltungsanordnung für ein Sperrwandler-Schalnetzteil.

(43) Veröffentlichungstag der Anmeldung:
**03.04.91 Patentblatt 91/14**

(45) Bekanntmachung des Hinweises auf die
Patenterteilung:
**16.02.94 Patentblatt 94/07**

(84) Benannte Vertragsstaaten:
**BE DE ES FR GB IT NL**

(56) Entgegenhaltungen:
**EP-A- 0 144 754**
**FR-A- 2 293 738**

(73) Patentinhaber: **SIEMENS AKTIENGESELL-
SCHAFT
Wittelsbacherplatz 2
D-80333 München(DE)**

(72) Erfinder: **Feldkeller, Martin, Dipl.-Ing.
Josephsburgstrasse 59
D-8000 München 80(DE)**

Rank Xerox (UK) Business Services
(3.10/3.09/3.3.3)

## Beschreibung

Die Erfindung bezieht sich auf eine Schaltungsanordnung für ein Sperrwandler-Schaltnetzteil mit folgenden Merkmalen:

1) das Sperrwandler-Schaltnetzteil enthält einen Transformator mit

a) einer Primärwicklung, die im Kreis einer Gleichspannungsquelle in Reihe mit einem Schalter liegt und

b) einer Sekundärwicklung, die über eine Gleichrichtereinrichtung mit einer Last verbunden werden kann,

c) der Transformator wird in einer ersten Arbeitsphase (Flußphase), in der der Schalter eingeschaltet ist und in der Primärwicklung Strom fließt, magnetisiert und in einer zweiten Arbeitsphase (Sperrphase), in der der Schalter ausgeschaltet ist und in der Sekundärwicklung Strom fließt, entmagnetisiert;

2) die Schaltungsanordnung enthält eine integrierbare Steuerschaltung mit

a) einer Entmagnetisierungsüberwachung, die eine Spannung (Rückkopplungsspannung) an einer Transformatorwicklung detektiert und bei ausgeschaltetem Schalter das Einschalten erst dann freigibt, wenn die Rückkopplungsspannung in der Sperrphase einen bestimmten Schwellwert (Einschaltschwelle) passiert hat, und

b) einer Unterdrückungsschaltung, die während einer bestimmten Zeit (Ausblendzeit) nach Beginn der Sperrphase die Einschaltfreigabe für den Schalter blockiert.

Sperrwandler mit solchen Schaltungen sind in vielfältigen Ausführungen bekannt; vgl. hierzu beispielsweise das von Joachim Wüstehube herausgegebene Lehrbuch "Schaltnetzteile", Expert-Verlag, Grafenau, 1979, insbesondere Kap. 3.3.

Ein Sperrwandler enthält einen Transformator, dessen Primärwicklung über einen elektrischen Schalter an eine Gleichspannung, etwa eine gleichgerichtete und geglättete Netzspannung, angeschlossen ist und dessen Sekundärkreis eine ebenfalls gleichgerichtete, geglättete Spannung abgibt. In einer ersten Phase (Flußphase) ist der Schalter leitend. Im Primärkreis fließt dann Strom, wobei der Transformator elektrische Energie aufnimmt und magnetisch speichert. In der zweiten Arbeitsphase (Sperrphase) sperrt der Schalter den primärseitigen Stromfluß, mit der Folge, daß die Spannung am Transformator ihre Polarität wechselt, im Sekundärkreis Strom fließt und der Transformator die magnetisch gespeicherte Energie an den Verbraucher abgibt.

Ein neuer Arbeitszyklus sollte erst dann beginnen, wenn der Transformator vollständig entmagnetisiert ist. Der wesentliche Grund für diese Forderung ist der, daß bei vorzeitigem Beginn der Flußphase der Transformator nach mehreren Zyklen in die Sättigung getrieben werden kann und dann der Schalter, beispielsweise ein Bipolar-Transistor, überlastet wird.

Zur Überwachung der Entmagnetisierung entnimmt man gemäß der Europäischen Offenlegungsschrift EP 0 144 754 einer geeigneten Transformatorwicklung eine Spannung (Rückkopplungsspannung) und sorgt dafür, daß der Schalter erst dann wieder eingeschaltet wird, wenn die Rückkopplungsspannung in der Sperrphase ihr Vorzeichen wechselt.

Diese Überwachungstechnik ist nicht vollkommen störungsfrei. Aufgrund parasitärer Elemente im Transformator schwingt die Rückkopplungsspannung zu Beginn der Sperrphase nach. Bei sekundärseitigem Kurzschluß kann dieses "Nachklingeln" zu Polaritätswechseln führen, ohne daß der Transformator bereits vollständig entmagnetisiert ist. Damit der Schalttransistor bei diesen schwingungsbedingten Nulldurchgängen nicht anspricht, legt man die Ansteuerlogik so aus, daß die vom Nulldurchgangsdetektor gelieferte Information während einer bestimmten Zeit (Ausblendzeit T) nach Beginn der Sperrphase ignoriert wird. Bei der Bemessung von T müssen unterschiedliche Forderungen berücksichtigt werden: Die Ausblendzeit darf einerseits nicht zu kurz sein, da man den Primärkreis möglichst wenig bedämpft und dementsprechend das Transformatorklingeln nur langsam abklingt. Bei zu großen T-Werten besteht andererseits die Gefahr, daß bei einer kleinen Ausgangslast - in diesem Fall kann der Transformator seine Energie rasch abgeben - das tatsächliche Ende des Entmagnetisierungsvorgangs nicht erkannt wird. Wie die Praxis gezeigt hat, ist es außerordentlich schwierig, eine Ausblendzeit zu finden, mit der sich parasitäre Nulldurchgänge sauber von entmagnetisierungsbedingten Nulldurchgängen trennen lassen.

Um hier Abhilfe zu schaffen, ist bei einer Schaltungsanordnung der eingangs genannten Art erfindungsgemäß vorgesehen, daß

2) c) die Ausblendzeit von der an der Last abfallenden Spannung (Lastspannung) abhängt, mit der Maßgabe, daß

d) bei Lastspannungen unterhalb eines kritischen Schwellwertes die Ausblendzeit länger ist als eine vorgegebene Zeitspanne und bei Lastspannungen, die mindestens so groß sind wie der kritische Schwellwert, die Ausblendzeit höchstens so lang wie die vorgegebene Zeitspanne ist.

Die Erfindung geht von der Erkenntnis aus, daß die Ausblendzeit T sämtlichen Bedingungen genügen kann, wenn sie variabel, und zwar als Funktion der Lastspannung, gestaltet wird. Klingelbedingte Vorzeichenwechsel können nur bei kleiner Lastspannung, also etwa im Kurzschlußfall oder in der Anlaufphase, auftreten; sie werden ignoriert, wenn, wie erfindungsgemäß vorgesehen, die Ausblendzeit lang ist. Da bei geringer Lastspannung auch die Entmagnetisierungsphase relativ lange dauert, ist hier ein grosser T-Wert akzeptabel. Die Ausblendzeit muß dagegen kurz sein, wenn der Transformator seine Energie rasch abgibt. Dies ist nur dann der Fall, wenn sich - bei wenig belastetem Schaltnetzteil - die Ausgangsspannung um ihren Sollwert bewegt. Bei hoher Ausgangsspannung sind aber keine vorzeitigen Nulldurchgänge zu befürchten, so daß hier der erfindungsgemäß vorgeschriebene kleine T-Wert eine störungsfreie Signalerfassung ermöglicht. Hat die Lastspannung ihren Nennwert in etwa erreicht und ist das Netzteil ausreichend stark belastet, so ist die Länge der Ausblendzeit unkritisch. Dieser Umstand erweitert den Gestaltungsspielraum bei der Wahl einer konkreten T-Funktion.

Bestimmte T-Verläufe lassen sich schaltungstechnisch besonders einfach realisieren. Dies gilt beispielsweise für eine Ausblendzeit, die unterhalb eines kritischen Lastspannungswertes $U_{LK}$ (etwa 80 % des Sollwertes), einen ersten Festwert $T_1$ einnimmt und dann, wenn die Lastspannung die Schwelle $U_{LK}$ überschreitet, auf einen zweiten Festwert $T_2$ ($T_2 < T_1$) zurückspringt. Ohne besonderen Aufwand läßt sich auch eine Ausblendzeit erzeugen, die mit zunehmender Lastspannung abnimmt und bei einem kritischen Wert der Lastspannung, beispielsweise dem Sollwert, ganz verschwindet.

Bei der schaltungsmäßigen Erzeugung der variablen Ausblendzeit ist es zweckmäßig, soweit wie möglich auf bereits vorhandene Schaltmittel zurückzugreifen. So sollte das Signal zur Variation der Ausblendzeit nach Möglichkeit von einer im Primärkreis bereits verfügbaren, zur Lastspannung proportionalen Spannung abgeleitet werden; diese Spannung könnte etwa das zur Stabilisierung der Lastspannung erforderliche Regelsignal sein. Verfügt das Schaltnetzteil über einen synchron mit den Arbeitszyklen schwingenden Oszillator, so bietet es sich an, die verschiedenen T-Werte nach bestimmten Abschnitten einer Periode des Oszillatorsignals zu bemessen.

Weitere vorteilhafte Ausgestaltungen und Weiterbildungen der Erfindung sind Gegenstand zusätzlicher Ansprüche.

Die Erfindung soll nun anhand von Ausführungsbeispielen unter Bezugnahme auf die Figuren der beigefügten Zeichnung näher erläutert werden. In den Figuren sind einander entsprechende Teile mit gleichen Bezugszeichen versehen. Es zeigen:

FIG 1     ein Schaltbild einer typischen Schaltungsanordnung für ein Sperrwandler-Schaltnetzteil;

FIG 2     von einem ersten Ausführungsbeispiel Teile der Steuerschaltung;

FIG 3     von dem Ausführungsbeispiel der FIG 2 die Lastspannung $U_L$ als Funktion der Zeit t; und

FIG 4     ein weiteres Ausführungsbeispiel in der Darstellungsweise der FIG 2.

Der Übersicht halber sind die Schaltungsanordnungen in den Figuren nur insoweit dargestellt, als dies für ein Verständnis der Erfindung unbedingt erforderlich ist. Für eine ausführliche Erläuterung dieser Schaltungen wird auf die von der Fa. Siemens herausgegebene Produktinformation "IC's für die Unterhaltungselektronik", Auflage 8.87, S. 46 bis 63, oder auf die ältere Patentanmeldung EP 0 380 033 verwiesen.

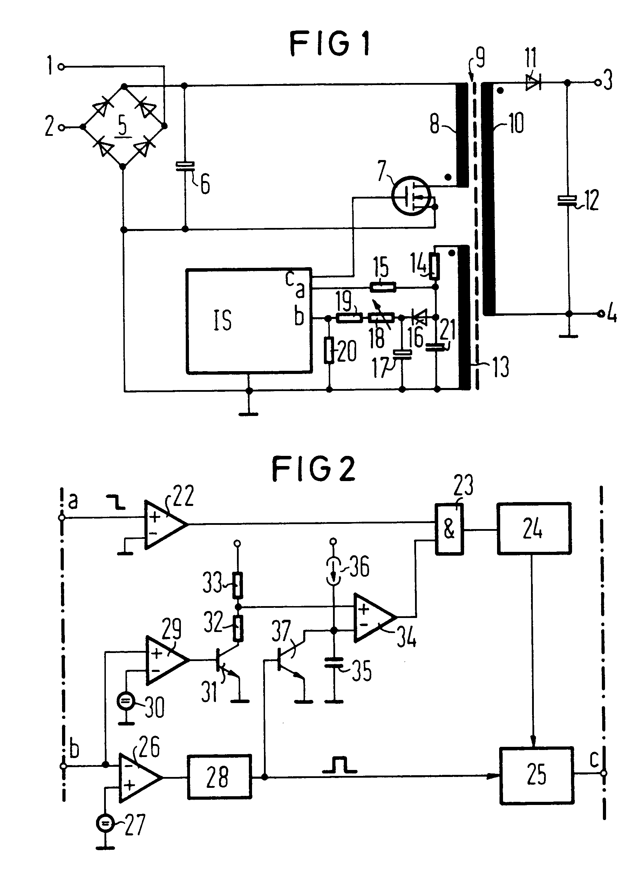

FIG 1 zeigt die Schaltung eines freischwingenden Sperrwandler-Schaltnetzteils, das aus einer zwischen den Klemmen 1 und 2 abgenommenen Netzspannung zwischen den Klemmen 3 und 4 eine stabilisierte Gleichspannung erzeugt. Hierzu wird zunächst die Netzspannung in einem Gleichrichter 5 gleichgerichtet, in einem Ladekondensator 6 geglättet und über einen elektrischen Schalter, im vorliegenden Fall einen SIPMOS-Transistor 7, auf eine Primärwicklung 8 eines Transformators 9 geführt. Während der Leitphase des Transistors wird Energie magnetisch im Transformator 9 gespeichert. In der Sperrphase wird diese Energie über eine Sekundärwicklung 10 des Transformators 9 an einen zwischen den Klemmen 3 und 4 liegenden, nicht dargestellten Verbraucher abgegeben. Die am Verbraucher abfallende Spannung wird über eine Diode 11 und einen weiteren Ladekondensator 12 gleichgerichtet und gesiebt.

Die Schaltung enthält einen Ansteuerbaustein IS, im vorliegenden Beispiel die kommerziell erhältliche integrierte Schaltung TDA 4605, die den Transistor 7 impulsbreitenmoduliert ansteuert. Zum Einschalten des Transistors 7 erhält der Baustein IS am Pin a ein erstes Spannungssignal (Rückkopplungsspannung). Dieses Signal wird aus einer mit der Sekundärwicklung 10 fest verkoppelten Regelwicklung 13 über die Widerstände 14 und 15 zugeführt. Zur Festlegung der Einschaltzeit erhält der Baustein IS aus der Regelwicklung am Anschluß b ein Regelsignal, das über eine Diode 16 und einen Ladekondensator 17 zunächst gleichgerichtet und geglättet und anschließend in einem aus den Widerständen 18, 19 und 20 gebildeten Spannungsteiler heruntergeteilt wird. Um eine Spitzengleichrichtung hochfrequenter Anteile zu vermeiden, ist der Widerstand 14 mit einem weiteren Kondensator 21 zu einem Tiefpaßfilter ergänzt. Durch Vergleich der Regelspannung mit einer internen Referenzspannung wird die Breite des an einem dritten Anschluß (Pin c) abgegebenen Ausgangsimpulses der Last der Sekundärseite angepaßt.

Damit der Transistor 7 erst dann eingeschaltet wird, wenn die Energie aus dem Transformator vollständig abgeflossen ist, darf das Transformatorklingeln keine Entmagnetisierung vortäuschen. FIG 2 zeigt, wie eine erfindungsgemäß vorgesehene Klingelunterdrückung in den Baustein IS eingebaut sein könnte. Dargestellt sind dabei nur diejenigen Baustein-Elemente, die sich auf die Klingelunterdrückung beziehen. Konventionelle Bestandteile sind lediglich als Blöcke eingezeichnet.

Das an Pin a empfangene Rückkopplungssignal wird mit dem Plus-Eingang eines ersten Komparators 22 verbunden, dessen Minus -Eingang geerdet ist. Der Komparatorausgang ist über ein Gatter 23 und eine Entmagnetisierungsüberwachung 24 auf einen Ausgangstreiber 25 geführt, der an Pin c Ansteuerimpulse für den Transistor 7 bereitstellt. An Pin b empfängt der Baustein IS die Regelspannung, die auf den Minus-Eingang eines Regelverstärkers 26 geführt wird. Der Plus-Eingang dieses Verstärkers liegt an einer den Sollwert $U_{soll}$ liefernden Referenzspannungsquelle 27; der Verstärkerausgang ist über einen Pulsbreitenmodulator 28 mit dem Ausgangstreiber 25 verbunden.

Ein von der Regelspannung abgeleitetes Signal beaufschlagt den Plus-Eingang eines zweiten Komparators 29, dessen Minus-Eingang an einer weiteren Referenzspannungsquelle 30 liegt und dessen Ausgang auf die Basis eines Transistors 31 führt. Die von der Referenzspannungsquelle 30 abgegebene Spannung beträgt 0,8 $U_{soll}$. Der Kollektor des Transistors 31 ist über zwei Widerstände 32, 33 an eine feste Spannung $U_{ref}$ gelegt, während der Emitter auf Masse liegt. Die zwischen den Widerständen 32 und 33 herrschende Spannung wird abgegriffen und auf den Plus-Eingang eines dritten Komparators 34 geleitet. Der Minus-Eingang dieses Komparators liegt an einem gegen Masse geschalteten Kondensator 35, der von einer Konstantstromquelle 36 aufgeladen wird. Parallel zum Kondensator 35 liegt die Kollektor-Emitter-Strecke eines Transistors 37, dessen Basis mit dem Ausgang des Pulsbreitenmodulators 28 beaufschlagt wird. Der Ausgang des Komparators 34 führt zum Gatter 23, das vom Komparator 22 nur dann ein Nulldurchgangssignal, im vorliegenden Fall eine logische "0", weiterleitet, wenn auch der Ausgang des Komparators 34 auf "0" liegt.

Die Unterdrückungsschaltung arbeitet folgendermaßen:

Wenn die Ausgangsspannung noch nicht 80 % ihres Sollwertes erreicht hat, sperrt der Komparator 29 den Transistor 31, mit der Folge, daß am Plus-Eingang des Komparators 34 die volle Spannung $U_{ref}$ anliegt. Die am Minus-Eingang des Komparators 34 liegende Spannung startet zu Beginn der Sperrphase mit dem Wert Null - der Kondensator 35 ist während der vorausgehenden Flußphase über den Transistor 37 entladen worden - und steigt allmählich an, weil während der Sperrphase auch der Transistor 37 sperrt und der Kondensator somit von der Konstantstromquelle 36 geladen werden kann. Zur Zeit

$$T_1 \ = \ \frac{C \ \times \ U_{ref}}{I}$$

(C = Kapazität des Kondensators 35, I = Stromstärke der Konstantstromquelle 36) hat die Spannung am Minus-Eingang den am Plus-Eingang liegenden Wert erreicht, so daß der Komparator 34 eine logische "0" auf das Gatter 23 gibt. Unter dieser Bedingung ist das Gatter frei, eine logische "0" vom Komparator 22, also ein Nulldurchgangssignal, an die Entmagnetisierungsüberwachung 24 weiterzuleiten. Nulldurchgänge sind dementsprechend während einer Zeitspanne $T_1$ ausgeblendet.

Ist die Ausgangsspannung mindestens 0,8 $U_{soll}$, so steuert der Komparator 29 den Transistor 31 leitend, mit dem Ergebnis, daß am Plus-Eingang des Komparators 34 nurmehr die heruntergeteilte Spannung

$$\frac{R32}{R32 \ + \ R33} \ U_{ref}$$

anliegt. Dementsprechend wird das Gatter mit einer Verzögerung $T_2$,

$$T_2 \ = \ \frac{R32}{R32 \ + \ R33} \ T_1$$

nach Beginn der Sperrphase in einen Zustand versetzt, in dem es ein Nulldurchgangssignal passieren lassen kann. Dementsprechend hat die Ausblendzeit bei $U_L$ = 0,8 $U_{soll}$ den Wert $T_2$. Typische $T_1$- und $T_2$-Werte liegen bei 12 $\mu$sec bzw. 4 $\mu$sec.

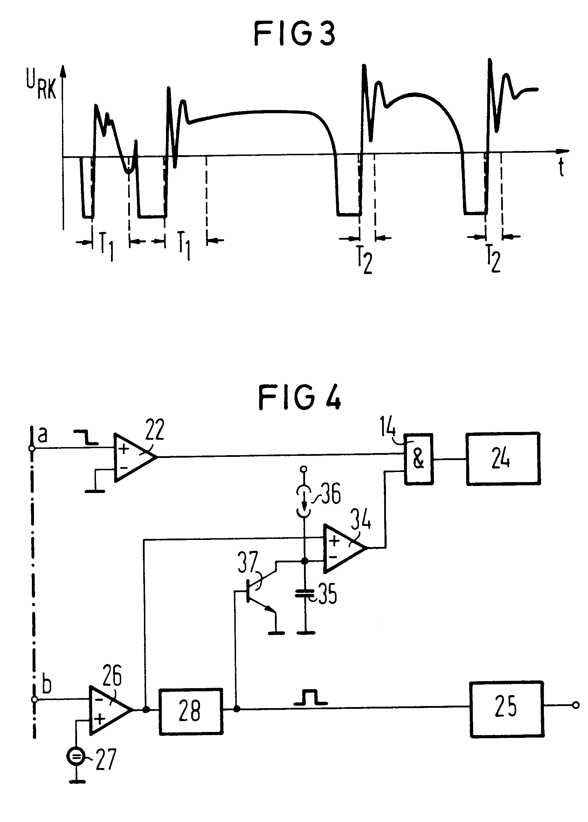

FIG 3 zeigt die Rückkopplungsspannung $U_{RK}$ als Funktion der Zeit t. In den ersten beiden Sperrphasen hat die Lastspannung noch nicht 80 % ihres Sollwertes erreicht. Dementsprechend hat die Ausblendzeit den großen Wert $T_1$. Polaritätswechsel, die durch das Trafoklingeln hervorgerufen werden, werden unterdrückt, während die durch die vollständige Abmagnetisierung ausgelösten Nulldurchgänge registriert werden können. Bei den folgenden Arbeitszyklen hat $U_L$ den Umschaltwert 0,8 $U_{soll}$ überschritten. Dementsprechend geht die Ausblendzeit auf den kurzen Wert $T_2$ zurück. Diese Zeit ist so bemessen, daß sie noch kürzer ist als die denkbar kürzeste Entmagnetisierungsphase, die bei voller Lastspannung im Leerlaufbetrieb durchaus deutlich unter 10 $\mu$sec liegen kann. Klingelbe-

dingte Nulldurchgänge sind bei ausgeregelter Lastspannung nicht zu befürchten.

Bei der Unterdrückungsschaltung der FIG 2 hat die Ausblendzeit unterhalb und oberhalb einer bestimmten Lastspannungsschwelle einen großen bzw. kleinen Festwert. In FIG 4 wird eine Schaltungsvariante dargestellt, bei der die Ausblendzeit mit fallender Impulsbreite linear fällt. Wie der Figur zu entnehmen ist, wird das Signal für die Variation der Ausblendzeit dem Ausgang des Regelverstärkers 26 entnommen und direkt auf den Plus-Eingang des Komparators 34 geführt. Damit stellt sich der erwähnte T-Verlauf automatisch ein.

Beide Unterdrückungsschaltungen lassen sich ohne weiteres in den Ansteuerbaustein inkorporieren. Eine solche Lösung ist besonders kostengünstig, liefert aber keine sehr exakten Ausblendzeiten, und zwar vor allem deshalb, weil die Werte von integrierten Konstantstromquellen und Kondensatoren streuen. Dürfen die T-Werte nur geringe Toleranzen haben, so könnte man wenigstens die kritischen Teile der Unterdrückungsschaltung durch externe Bauelemente realisieren oder aber die zur Definition der gewünschten Zeitspannen erforderlichen Spannungsflanken auf andere Weise erzeugen.

Solche Spannungsflanken sind verfügbar, wenn der Sperrwandler festfrequent arbeitet. In diesem Fall enthält nämlich der Ansteuerbaustein einen synchron mit den Arbeitszyklen schwingenden Oszillator, dessen Ausgangsspannung einen sägezahnartigen Verlauf mit einer definierten Periode und definierten Periodenabschnitten für die fallenden bzw. steigenden Spannungsflanken aufweist. Hier bietet es sich an, die T-Werte der FIG 3 dadurch zu realisieren, daß man $T_2$ aus der fallenden (kurzen) Flanke und $T_1$ aus der Summe der fallenden Flanke mit einem bestimmten Teil der steigenden Flanke bildet. Die schaltungstechnische Realisierung dieser T-Wert-Erzeugung macht keinerlei Schwierigkeiten; sie ist deshalb hier nicht näher dargestellt.

Im Laufe des Betriebs kann es ausgangsseitig zu einem plötzlichen Kurzschluß kommen. Die Lastspannung bricht dann auf einen sehr kleinen Wert zusammen, wobei sie dann, wenn der Kurzschluß neben kapazitiven auch induktive Anteile hat, zunächst um den Kurzschlußwert schwingt und dabei auch ihr Vorzeichen wechseln kann. Entsteht ein solcher Kurzschluß vor dem Ende der Sperrphase, so kann die Ansteuerlogik ein falsches Nulldurchgangssignal erhalten. Um dies zu vermeiden, könnte man entweder versuchen, die kurzschlußbedingten Unterschwinger durch eine entsprechende Auslegung des Schaltnetzteils - etwa durch eine antiparallel zum ausgangsseitigen Glättungskondensator geschaltete Diode - gar nicht erst entstehen zu lassen oder aber ihre Folgen abzumildern - beispielsweise durch Wahl eines Transformators mit ausreichender Reserve zur Sättigung. Eine weitere Möglichkeit besteht darin, zusätzlich noch den Schwellwert der Rückkopplungsspannung, bei dem die Entmagnetisierungsüberwachung anspricht, zu Werten zu verschieben, die nur von den entmagnetisierungsbedingten Spannungsspitzen erreicht werden. Da diese Spannungsspitzen von der momentanen Lastspannung abhängen, muß die Schwellwertverschiebung bei Inbetriebnahme des Schaltnetzteils beim Wert Null beginnen und darf erst dann einsetzen, wenn sich auch die Lastspannung aufbaut. Ein solcher Verlauf der Einschaltschwelle ist Gegenstand der am gleichen Tage eingereichten europäischen Patentanmeldung EP 0 420 997 mit dem Titel "Schaltungsanordnung für ein Sperrwandler-Schaltnetzteil", auf die wegen weiterer Einzelheiten verwiesen wird.

**Patentansprüche**

1. Schaltungsanordnung für ein Sperrwandler-Schaltnetzteil mit folgenden Merkmalen:

   1) das Sperrwandler-Schaltnetzteil enthält einen Transformator (9) mit

      a) einer Primärwicklung (8), die im Kreis einer Gleichspannungsquelle (5) in Reihe mit einem Schalter (7) liegt und

      b) einer Sekundärwicklung (10), die über eine Gleichrichtereinrichtung (11, 12) mit einer Last verbunden werden kann,

      c) der Transformator (9) wird in einer ersten Arbeitsphase (Flußphase), in der der Schalter (7) eingeschaltet ist und in der Primärwicklung (8) Strom fließt, magnetisiert und in einer zweiten Arbeitsphase (Sperrphase), in der der Schalter (7) ausgeschaltet ist und in der Sekundärwicklung (10) Strom fließt, entmagnetisiert;

   2) die Schaltungsanordnung enthält eine integrierbare Steuerschaltung (IS) mit

      a) einer Entmagnetisierungsüberwachung (24), die eine Spannung (Rückkopplungsspannung) an einer Transformatorwicklung (13) detektiert und bei ausgeschaltetem Schalter (7) das Einschalten erst dann freigibt, wenn die Rückkopplungsspannung in der Sperrphase einen bestimmten Schwellwert (Einschaltschwelle) passiert hat, und

      b) einer Unterdrückungsschaltung (23, 29, ..., 37), die während einer bestimmten Zeit (Ausblendzeit) nach Beginn der Sperrphase die Einschaltfreigabe für den Schalter blockiert;

   **dadurch gekennzeichnet, daß**

2) c) die Ausblendzeit (T) von der an der Last abfallenden Spannung (Lastspannung $U_L$) abhängt, mit der Maßgabe, daß d) bei Lastspannungen unterhalb eines kritischen Schwellwertes ($U_{LK}$) die Ausblendzeit (T) länger ist als eine vorgegebene Zeitspanne ($T_K$) und bei Lastspannungen, die mindestens so groß sind wie der kritische Schwellwert ($U_{LK}$), die Ausblendzeit (T) höchstens so lang wie die vorgegebene Zeitspanne ($T_K$) ist.

2. Schaltungsanordnung nach Anspruch 1, für ein Sperrwandlerschaltnetzteil mit einer auf einen Sollwert stabilisierten Lastspannung, **dadurch gekennzeichnet,** daß der kritische Schwellwert ($U_{LK}$) zwischen 70 % und 100 %, insbesondere zwischen 75 und 85 %, des Sollwertes der stabilisierten Lastspannung liegt.

3. Schaltungsanordnung nach Anspruch 1 oder 2, **dadurch gekennzeichnet,** daß die Ausblendzeit (T) bei $U_L < U_{LK}$ einen Mindestwert $T_1$ hat und bei $U_L \geq U_{LK}$ einen Höchstwert ($T_2$) hat, mit $T_1 > T_K \geq T_2$.

4. Schaltungsanordnung nach Anspruch 3, **dadurch gekennzeichnet,** daß die Ausblendzeit (T) bei $U_L < U_{LK}$ einen ersten festen, dem Mindestwert ($T_1$) entsprechenden Wert und bei $U_L \geq U_{LK}$ einen zweiten festen, dem Höchstwert ($T_2$) entsprechenden Wert hat.

5. Schaltungsanordnung nach Anspruch 4, bei der die integrierbare Steuerschaltung eine der Lastspannung proportionale Spannung (Regelspannung) empfängt und die Entmagnetisierungsüberwachung einen von der Rückkopplungsspannung beaufschlagten Nulldurchgangsdetektor enthält, **dadurch gekennzeichnet,** daß die Regelspannung in einem ersten Komparator (29) mit dem kritischen Schwellwert ($U_{LK}$) verglichen wird, daß die hieraus gebildete Differenzspannung auf die Basis eines Transistors (31) gegeben wird, dessen Kollektor-Emitter-Strecke einerseits über einen Spannungsteiler (32, 33) mit einer Referenzspannungsquelle ($U_{ref}$) und andererseits mit Masse verbunden ist, daß vom Spannungsteiler (32, 33) eine Spannung (Grenzspannung) abgegriffen und in einem zweiten Komparator (34) mit einer ab Beginn der Sperrphase ansteigenden Spannung (Rampenspannung) verglichen wird, daß die hieraus gebildete Differenzspannung auf einen ersten Eingang eines Gatters (23) geführt wird, dessen zweiter Eingang das Ausgangssignal des Nulldurchgangsdetektors (22) empfängt, und daß das Gatter (23) das einen Nulldurchgang anzeigende Ausgangssignal des Nulldurchgangsdetektors (22) nur dann weiterleitet, wenn die Rampenspannung den Wert der Grenzspannung erreicht hat.

6. Schaltungsanordnung nach Anspruch 5, **dadurch gekennzeichnet,** daß die Rampenspannung von einem Kondensator (35) stammt, der während der Sperrphase durch eine Konstantstromquelle (36) geladen wird.

7. Schaltungsanordnung nach Anspruch 1 oder 2, **dadurch gekennzeichnet,** daß die Ausblendzeit (T) mit zunehmender Lastspannung ($U_L$) abnimmt und beim kritischen Schwellwert ($U_{LK}$), der bei stabilisierter Lastspannung vorzugsweise deren Sollwert entspricht, einen Minimalwert, insbesondere den Wert Null, annimmt.

8. Schaltungsanordnung nach Anspruch 7, bei der die integrierbare Steuerschaltung einen von der Rückkopplungsspannung beaufschlagten Nulldurchgangsdetektor enthält und eine der Lastspannung proportionale Spannung (Regelspannung) empfängt und in einem Regelverstärker die Abweichung der Regelspannung von einem Referenzwert verstärkt, **dadurch gekennzeichnet,** daß die Ausgangsspannung des Regelverstärkers in einem Komparator (34) mit einer ab Beginn der Sperrphase ansteigenden Spannung (Rampenspannung) verglichen wird, daß die hieraus gebildete Differenzspannung auf einen ersten Eingang eines Gatters (23) geführt wird, dessen zweiter Eingang das Ausgangssignal des Nulldurchgangsdetektors empfängt und daß das Gatter (23) das einen Nulldurchgangsdetektor anzeigende Ausgangssignal des Nulldurchgangsdetektors (22) nur dann weiterleitet, wenn die Rampenspannung den Wert der Ausgangsspannung des Regelverstärkers erreicht hat.

9. Schaltungsanordnung nach Anspruch 4, bei der die integrierbare Steuerschaltung einen mit den Arbeitsphasen des Sperrwandler-Schaltnetzteils synchronisierten Oszillator enthält, der eine periodisch schwingende Spannung (Oszillatorspannung) abgibt, **dadurch gekennzeichnet,** daß die Festwerte ($T_1$, $T_2$) der Ausblendzeit (T) jeweils definierte Bruchteile einer Periode der Oszillatorspannung sind.

10. Schaltungsanordnung nach einem der Ansprüche 1 bis 9, **dadurch gekennzeichnet,** daß die Ausblendzeit (T) nur dann höchstens so lang wie der kritische Zeitwert ($T_K$) ist, wenn nicht nur die Lastspannung ($U_L$) mindestens so groß wie der kritische Schwellwert ($U_{LK}$) ist, sondern auch der ohmsche Widerstand der Last einen Mindestwert hat.

**Claims**

1. Circuit arrangement for a flyback-converter switched-mode power supply having the following features:

    1) the flyback-converter switched-mode power supply contains a transformer (9) having

        a) a primary winding (8) which is connected in series with a switch (7) in the circuit of a DC voltage source (5) and

        b) a secondary winding (10) which can be connected to a load via a rectifier device (11, 12),

        c) the transformer (9) being magnetized in a first operating phase (flow phase) in which the switch (7) is switched on and current is flowing in the primary winding (8) and being demagnetized in a second operating phase (blocking phase) in which the switch (7) is switched off and current is flowing in the secondary winding (10);

    2) the circuit arrangement contains a control circuit (IC), which can be integrated, having

        a) a demagnetization monitor (24) which detects a voltage (feedback voltage) on a transformer winding (13) and, when the switch (7) is switched off, does not enable switching on until the feedback voltage in the blocking phase has passed a specific threshold value (switching-on threshold), and

        b) a suppression circuit (23, 29, ..., 37) which blocks enabling of the switch to switch on during a certain time (masking time) after the start of the blocking phase;

    characterized in that

        2) c) the masking time (T) depends on the voltage (load voltage $U_L$) dropped on the load, with the proviso that

        d) at load voltages less than a critical threshold value ($U_{LC}$), the masking time (T) is longer than a predetermined time interval ($T_C$) and, at load voltages which are at least as large as the critical threshold value ($U_{LC}$), the masking time (T) is at most as long as the predetermined time interval ($T_C$).

2. Circuit arrangement according to Claim 1, for a flyback-converter switched-mode power supply having a load voltage which is stabilized at a required value, characterized in that the critical threshold value ($U_{LC}$) is between 70% and 100%, preferably between 75 and 85%, of the required value of the stabilized load voltage.

3. Circuit arrangement according to Claim 1 or 2, characterized in that the masking time (T) has a minimum value $T_1$ when $U_L < U_{LC}$ and has a maximum value ($T_2$) where $T_1 > T_C \geqq T_2$, when $U_L \geqq U_{LC}$.

4. Circuit arrangement according to Claim 3, characterized in that the masking time (T) has a first, fixed value corresponding to the minimum value ($T_1$), when $U_L < U_{LC}$, and has a second, fixed value corresponding to the maximum value ($T_2$), when $U_L \geqq U_{LC}$.

5. Circuit arrangement according to Claim 4, in the case of which the control circuit, which can be integrated, receives a voltage (regulating voltage) which is proportional to the load voltage, and the demagnetization monitor contains a zero-crossing detector to which the feedback voltage is applied, characterized in that the regulating voltage is compared in a first comparator (29) with the critical threshold value ($U_{LC}$), in that the difference voltage derived therefrom is passed to the base of a transistor (31) whose collector-emitter junction is connected on the one hand via a voltage divider (32, 33) to a reference-voltage source ($U_{ref}$) and on the other hand to earth, in that a voltage (limiting voltage) is picked off from the voltage divider (32, 33) and is compared, in a second comparator (34), with a voltage (ramp voltage) which rises from the start of the blocking phase, in that the difference voltage derived therefrom is fed to a first input of a gate (23) whose second input receives the output signal of the zero-crossing detector (22), and in that the gate (23) passes on the output signal, which indicates a zero crossing, of the zero-crossing detector (22) only when the ramp voltage has reached the value of the limiting voltage.

6. Circuit arrangement according to Claim 5, characterized in that the ramp voltage originates from a capacitor (35) which is charged by a constant-current source (36) during the blocking phase.

7. Circuit arrangement according to Claim 1 or 2, characterized in that the masking time (T) reduces with increasing load voltage ($U_L$) and assumes a minimum value, preferably the value zero, at the critical threshold value ($U_{LC}$) which, in the case of stabilized load voltage, preferably corresponds to its required value.

8. Circuit arrangement according to Claim 7, in the case of which the control circuit, which can be integrated, contains a zero-crossing detector to which the feedback voltage is applied, receives a voltage (regulating voltage) which is proportional to the load voltage, and, in a regulating amplifier, amplifies the deviation of the regulating voltage from a reference value, characterized in that the output voltage of the regulating amplifier is compared, in a comparator (34), with a voltage (ramp voltage) which rises from the start of the blocking phase, in that the difference voltage derived therefrom is fed to a first input of a gate (23) whose second input receives the output signal of the zero-crossing detector, and in that the gate (23) passes on the output signal, which indicates a zero crossing, of the zero-crossing detector (22) only when the ramp voltage has reached the value of the output voltage of the regulating amplifier.

9. Circuit arrangement according to Claim 4, in the case of which the control circuit, which can be integrated, contains an oscillator which is synchronized to the operating phases of the flyback-converter switched-mode power supply and emits a cyclically oscillating voltage (oscillator voltage), characterized in that the fixed values ($T_1$, $T_2$) of the masking time ($T$) are in each case defined fractions of one cycle of the oscillator voltage.

10. Circuit arrangement according to one of Claims 1 to 9, characterized in that the masking time ($T$) is at most as long as the critical time value ($T_C$) only when not only is the load voltage ($U_L$) at least as large as the critical threshold value ($U_{LC}$) but the resistance of the load is also at a minimum value.

**Revendications**

1. Montage pour un bloc d'alimentation à convertisseur à oscillateur bloqué présentant les caractéristiques suivantes :

    1) la partie du bloc d'alimentation à convertisseur à oscillateur bloqué est pourvue d'un transformateur (9) comportant

        a) un enroulement primaire (8), qui, dans le circuit d'une source de tension (5), est branché en série avec un interrupteur (7), et

        b) un enroulement secondaire (10), qui peut être raccordé à une charge par l'intermédiaire d'un dispositif redresseur (11,12),

        c) le transformateur (9) est aimanté au cours d'une première phase de travail (phase de passage), pendant laquelle l'interrupteur (7) est fermé et un courant circule dans l'enroulement primaire (8), et est désaimanté au cours d'une seconde phase de travail (phase de blocage), dans laquelle l'interrupteur (7) est ouvert et un courant circule dans l'enroulement secondaire (10);

    2) le montage comporte un circuit de commande intégrable (IS) comportant

        a) une unité de contrôle de désaimantation (24), qui détecte une tension (tension de réaction) aux bornes d'un enroulement (13) du transformateur et, lorsque l'interrupteur (7) est fermé, autorise la fermeture de l'interrupteur uniquement lorsque la tension de réaction a dépassé, pendant la phase de blocage, une valeur de seuil déterminée (seuil de fermeture), et

        b) un circuit de suppression (23,29,...,37), qui bloque l'autorisation de fermeture de l'interrupteur, pendant un intervalle de temps déterminé (temps d'arrêt) après le début de la phase de blocage;

    remarquable par le fait que

        2) c) le temps d'occupation ($T$) dépend de la tension (tension de charge $U_L$) qui chute dans la charge, et ce avec la condition selon laquelle

        d) dans le cas de tensions de charge inférieures à une valeur de seuil critique ($U_{LK}$), le temps d'arrêt ($T$) est plus long qu'un intervalle de temps prédéterminé ($T_K$) et que, dans le cas de tensions de charge, qui sont au moins égales à la valeur de seuil critique ($U_{LK}$), le temps d'arrêt ($T$) est tout au plus aussi long que l'intervalle de temps prédéterminé ($T_K$).

2. Montage suivant la revendication 1, pour une partie de réseau d'alimentation à découpage et à oscillateur bloqué, comportant une tension de charge stabilisée à une valeur de consigne, caractérisé par le fait que la valeur de seuil critique ($U_{LK}$) est comprise entre 70 % et 100 %, notamment entre 75 et 85 %, de la valeur de consigne de la tension de charge stabilisée.

**3.** Montage suivant la revendication 1 ou 2, caractérisé par le fait que pour $U_L < U_{LK}$, le temps d'arrêt (T) possède une valeur minimale $T_1$ et que, pour $U_L \geq U_{LK}$, il possède une valeur maximale ($T_2$), avec $T_1 > T_K \geq T_2$.

**4.** Montage suivant la revendication 3, caractérisé par le fait que pour $U_L < U_{LK}$, le temps d'arrêt (T) possède une première valeur fixe qui correspond à la valeur minimale ($T_1$) et que, pour $U_L \geq U_{LK}$, il possède une seconde valeur fixe qui correspond à la valeur maximale ($T_2$).

**5.** Montage suivant la revendication 4, dans lequel le circuit de commande intégrable reçoit une tension (tension de réglage) proportionnelle à la tension de charge, et une unité de contrôle de désaimantation contient un détecteur d'annulations, qui est chargé par la tension de réaction, caractérisé par le fait que la tension de réglage est comparée, dans un premier comparateur (29), à la valeur de seuil critique ($U_{LK}$), que la tension différentielle formée à partir de là est appliquée à la base d'un transistor (31), dont la voie collecteur-émetteur est raccordée, d'une part, par l'intermédiaire d'un diviseur de tension (32,33), à une source de tension de référence ($U_{ref}$), et, d'autre part, à la masse, qu'une tension (tension limite) est prélevée du diviseur de tension (32,33) et est comparée, dans un second comparateur (34), à une tension (tension en rampe), qui augmente à partir du début de la phase de blocage, que la tension différentielle formée à partir de là est envoyée à une première entrée d'une porte (23), dont la seconde entrée reçoit le signal de sortie du détecteur d'annulations (22), et que la porte (23) ne retransmet le signal de sortie, qui indique une annulation, du détecteur d'annulations (22) que lorsque la tension en rampe a atteint la valeur de la tension limite.

**6.** Montage suivant la revendication 5, caractérisé par le fait que la tension en rampe est produite par un condensateur (35), qui est chargé pendant la phase de blocage par une source de courant constant (36).

**7.** Montage suivant la revendication 1 ou 2, caractérisé par le fait que le temps d'arrêt (T) diminue lorsque la tension de charge ($U_L$) augmente et prend une valeur minimale, notamment la valeur nulle, pour la valeur de seuil critique ($U_{LK}$), qui, lorsque la tension de charge est stabilisée, correspond de préférence à la valeur de consigne de cette tension.

**8.** Montage suivant la revendication 7, dans lequel le circuit de commande intégrable contient un détecteur d'annulations chargé par la tension de réaction et reçoit une tension (tension de réglage) proportionnelle à la tension de charge et dans lequel l'écart entre la tension de réglage et une valeur de référence est amplifié dans un amplificateur de réglage, caractérisé par le fait que la tension de sortie de l'amplificateur de réglage est comparée, dans un comparateur (34), à une tension (tension en rampe), qui augmente à partir du début de la phase de blocage, que la tension différentielle formée à partir de là est envoyée à une première entrée d'une porte (23), dont la seconde entrée reçoit le signal de sortie du détecteur d'annulations et que la porte (23) ne retransmet le signal de sortie, qui indique une annulation, du détecteur d'annulation (22) que lorsque la tension en rampe a atteint la valeur de la tension de sortie de l'amplificateur de réglage.

**9.** Montage suivant la revendication 4, dans lequel le circuit de commande intégrable comporte un oscillateur synchronisé avec les phases de travail dudit bloc d'alimentation à convertisseur à oscillateur bloqué et qui délivre une tension qui oscille périodiquement (tension de l'oscillateur), caractérisé par le fait que les valeurs fixes ($T_1$, $T_2$) du temps d'arrêt (T) sont des fractions respectivement définies d'une période de la tension de l'oscillateur.

**10.** Montage suivant l'une des revendications 1 à 9, caractérisé par le fait que le temps d'arrêt (T) est au maximum aussi long que la valeur de temps critique ($T_K$) uniquement et non seulement lorsque la tension de charge ($U_L$) est au moins égale à la valeur de seuil critique ($U_{LK}$), mais également lorsque la résistance ohmique de la charge possède une valeur minimale.

EP 0 419 724 B1

# FIG 1

# FIG 2

10

# FIG 3

# FIG 4